# EUROPÄISCHE PATENTSCHRIFT

(11) **EP 0 496 968 B1**
(45) Veröffentlichungstag und Bekanntmachung des Hinweises auf die Patenterteilung: **22.02.1995**
(21) Anmeldenummer: 91119871.1
(22) Anmeldetag: 21.11.1991
(51) Int. Cl.: G01B 11/24, B28B 11/18, B24B 17/06, G05B 19/42

(54) **Verfahren und Vorrichtung zur Erzeugung einer Sollkontur an einem Werkstück**
Method and apparatus to produce a predetermined contour on a work piece
Procédé et dispositif pour établir la valeur de consigne du contour d'une pièce d'oeuvre

(30) Priorität: 30.01.1991 DE 4102721
(43) Veröffentlichungstag der Anmeldung: 05.08.1992
(73) Patentinhaber: ROSENTHAL AKTIENGESELLSCHAFT, 95100 Selb (DE); ZENTRUM FÜR ANGEWANDTE MIKROELEKTRONIK UND NEUE TECHNOLOGIEN DER BAYERISCHEN FACHHOCHSCHULEN (ZAM) e.V., D-84489 Burghausen (DE)
(72) Erfinder: Lindner, Helmut, W-8591 Waldershof (DE); Rubenbauer, Helmut, W-8591 Waldershof (DE); Mayer, Johann, Ing., W-8263 Burghausen (DE); Straubinger, Franz, Dipl.-Ing., W-8359 Aidenbach (DE); Kaufleitner, Franz, Ing., A-5122 Hochburg-Ach (AT)
(74) Vertreter: Tetzner, Volkmar, Dr.-Ing. Dr. jur.

(56) Entgegenhaltungen:
- DE-A- 2 554 086
- FR-A- 2 579 745
- GB-A- 2 183 537
- US-A- 3 886 372
- US-A- 4 658 550
- US-A- 4 803 371
- US-A- 4 941 100

## Beschreibung

Die Erfindung betrifft ein Verfahren zur Erzeugung einer gewünschten Kontur am äußeren Umfang eines Werkstückes, insbesondere aus Keramik oder Porzellan, wobei
a) zunächst der gesamte Umfangsbereich des unbearbeiteten Werkstücks durch eine Lichtquelle beleuchtet und durch einen das an der Werkstückoberfläche reflektierte Licht aufnehmenden optischen Sensor schrittweise abgetastet wird und hierdurch eine Bezugslinie ermittelt und
b) anschließend die gewünschte Kontur des Werkstücks durch ein anhand der Bezugslinie gesteuertes, rotierendes, nicht elastisches Bearbeitungswerkzeug erzeugt wird.

Die Erfindung betrifft ferner eine Vorrichtung zur Erzeugung einer gewünschten Kontur am äußeren Umfang eines Werkstücks, insbesondere aus Keramik oder Porzellan, enthaltend
a) eine Lichtquelle,
b) einen das an der Werkstückoberfläche reflektierte Licht aufnehmenden optischen Sensor zur schrittweisen Abtastung des gesamten Umfangsbereiches des unbearbeiteten Werkstücks zwecks Ermittlung einer Bezugslinie,
c) sowie ein anhand der Bezugslinie steuerbares, mit einem Drehantrieb verbundenes, nicht elastisches Bearbeitungswerkzeug.

Werkstücke aus Keramik oder Porzellan, insbesondere Flach- oder Hohlteile, wie Teller oder Schüsseln, werden durch Rollen, Pressen oder Gießen hergestellt. In allen Fällen entsteht im Umfangsbereich des Werkstücks ein Grat, der durch Putzen entfernt werden muß.

Während das Putzen von kreisrunden Werkstücken überwiegend maschinell erfolgt, wird das Putzen von unrunden, eckigen oder ovalen Werkstücken sowie von Werkstücken mit größeren Durchmesserunterschieden allgemein von Hand durchgeführt.

Bei annähernd runden Werkstücken hat man auch schon ein automatisches Putzen mit elastischem Werkzeug (ohne Werkzeugnachführung) versucht. Dieses Verfahren besitzt jedoch durch die Verwendung eines elastischen Werkzeuges nur eine geringe Bearbeitungsgenauigkeit und ist bei nicht-runden Werkstücken nicht anwendbar.

Ein Verfahren sowie eine Vorrichtung der eingangs genannten, im Oberbegriff der Ansprüche 1 bzw. 15 vorausgesetzten Art ist durch die US-A-4 803 371 bekannt. Hierbei wird der Rand des beispielsweise aus Glas bestehenden Werkstücks durch eine Kamera abgetastet. Diese unbearbeitete Außenkontur des Werkstücks bildet damit eine als Information gespeicherte Bezugslinie, die für die Steuerung des Bearbeitungswerkzeugs herangezogen wird. Zu diesem Zweck werden die Daten der unbearbeiteten Außenkontur mit den Daten der gewünschten Sollkontur verglichen.

Durch die US-A-3 886 372 ist weiterhin ein Verfahren bekannt, bei dem ein längliches Werkstück mit unbearbeiteten Seitenflächen (beispielsweise ein Holzbrett) im Kantenbereich abgetastet wird, wobei die Abtastzone in Längsrichtung des Werkstücks verschoben und das Werkstück synchron mit dieser Verschiebung der Abtastzone abwechselnd von gegenüberliegenden Seiten beleuchtet wird. Auch bei diesem Verfahren dienen die durch Abtastung der unbearbeiteten Außenkontur des Werkstücks gewonnenen Daten zur späteren Steuerung des Bearbeitungswerkzeugs.

Schließlich ist aus der US-A-4 658 550 eine Vorrichtung zur Bearbeitung der Kante eines unregelmäßig geformten Werkstücks, beispielsweise aus Glas, bekannt, bei dem die Kante des Werkstücks durch eine Kamera abgetastet und die hierbei gewonnenen Daten gespeichert und zur anschließenden Bearbeitung des Werkstücks herangezogen werden.

Der Erfindung liegt die Aufgabe zugrunde, ein Verfahren (entsprechend dem Oberbegriff des Anspruches 1) sowie eine Vorrichtung (gemäß dem Gattungsbegriff des Anspruches 15) so auszubilden, daß an Werkstücken beliebiger Form jede gewünschte Sollkontur auf besonders wirtschaftliche Weise und mit hoher Bearbeitungsgenauigkeit erzeugt werden kann.

Diese Aufgabe wird erfindungsgemäß bei dem Verfahren gemäß Anspruch 1 dadurch gelöst, daß
c) ein zur Erfassung von Formmerkmalen des Werkstücks geeigneter Sensor Verwendung findet und
d) durch eine das Ausganssignal des Sensors auswertende Steuerzentrale eine Bezugslinie ermittelt wird, die auf der Oberfläche nahe des äußeren Randes des Werkstücks, jedoch innerhalb der gewünschten Kontur liegt, wobei
e) die Bezugslinie durch Auswertung des Ausgangssignales des Sensors ermittelt und durch diejenigen Punkte auf der Oberfläche des Werkstückes definiert wird, die eine vorgegebene Bedingung an das Ausgangssignal des Sensors erfüllen.

Eine erfindungsgemäße Vorrichtung ist gemäß Anspruch 15 dadurch gekennzeichnet, daß
d) der Sensor zur Erfassung von Formmerkmalen des Werkstücks ausgebildet ist, und
e) eine zur Auswertung des Ausgangssignales des Sensors geeignete Steuerzentrale vorgesehen ist, durch die diejenigen Punkte bestimmbar sind, die eine vorgegebene Bedingung an das Ausgangssignal des Sensors efüllen, wobei mit diesen Punkten eine Bezugslinie definiert ist, die auf der Oberfläche nahe des äußeren Randes des Werkstücks, jedoch innerhalb der gewünschten Kontur liegt.

Zweckmäßige Ausgestaltungen der Erfindung sind Gegenstand der abhängigen Ansprüche.

Bei dem erfindungsgemäßen Verfahren wird durch schrittweises Abtasten des gesamten Umfangsbereiches des Werkstücks mittels eines zur Erfassung von Formmerkmalen des Werkstücks geeigneten optischen Sensors eine Bezugslinie ermittelt, die eine definierte räumliche Lage gegenüber der gewünschten Sollkontur aufweist und von der ausgehend das Bearbeitungswerkzeug bei Erzeugung der Sollkontur gesteuert wird.

Die Ermittlung der Bezugslinie durch den optischen Sensor erfolgt berührungslos. Eine Anzahl hierfür geeigneter optischer Abtastverfahren wird im folgenden näher erläutert. Die so gewonnene Bezugslinie wird gespeichert und dient bei Erzeugung der gewünschten Sollkontur des Werkstücks als Ausgangspunkt für die Steuerung des nicht elastischen, jedoch nachführbaren Bearbeitungswerkzeuges (z. B. eines rotierenden Fräswerkzeuges) sowie für die Steuerung weiterer, nachgeordneter Bearbeitungsstationen.

Das erfindungsgemäße Verfahren ist damit für Werkstücke beliebiger Form und jede gewünschte, d. h. auch für eine nicht-runde Sollkontur geeignet. Durch die Verwendung eines nicht elastischen Bearbeitungswerkzeuges ermöglicht es eine hohe Bearbeitungsgenauigkeit. Die Automatisierung des Verfahrens ergibt ferner hohe wirtschaftliche Vorteile im Vergleich zu einem manuellen Putzen der Werkstücke. Günstig ist insbesondere, daß ein unrundes Teil nicht lageorientiert in die Putzvorrichtung eingegeben werden muß und daß Fertigungstoleranzen ohne Bedeutung sind, da jedes Werkstück neu vermessen wird.

Bei einer zweckmäßigen Ausgestaltung des erfindungsgemäßen Verfahrens wird das Werkstück in einem von der Blickrichtung des Sensors abweichenden Winkel beleuchtet und die Bezugslinie durch Auswertung der Helligkeit des vom Werkstück reflektierten und vom Sensor aufgenommenen Lichts ermittelt. Es handelt sich hierbei somit um eine Oberflächenwinkelbestimmung durch strukturierte Beleuchtung. Die Helligkeit des vom optischen Sensor gemessenen reflektierten Lichtes ist bei einem diffusen Reflektor, wie ungebrannter Keramik, eine eindeutige Funktion des Winkels der Werkstückoberfläche zum einfallenden Licht.

Die Bestimmung der Bezugslinie kann je nach Art des Umfangsbereiches des Werkstücks, etwa der Teller-Randform, nach verschiedenen Kriterien erfolgen.

So kann man zur Ermittlung der Bezugslinie diejenigen Punkte im Umfangsbereich des Werkstücks bestimmen, die gleiche Helligkeit und gleiche Oberflächenneigung zum einfallenden Licht aufweisen.

Eine andere Möglichkeit besteht darin, zur Ermittlung der Bezugslinie Helligkeitsdifferenzen benachbarter Punkte im Umfangsbereich des Werkstücks zu bestimmen. Durch Auswertung solcher Helligkeitsdifferenzen können insbesondere Krümmungen, wie scharfe Kanten am Werkstück, ermittelt und als Bezugslinie verwendet werden.

Durch einen parametrisierbaren Auswerte-Algorithmus läßt sich bei komplizierten Werkstückformen auch das mehrfache Auftreten der vorstehend genannten Kriterien beherrschen.

Findet ein einäugiger Sensor Verwendung, der das Werkstück in einer einzigen Blickrichtung abtastet, so gewinnt man eine zweidimensionale Bezugslinie. Im Rahmen der Erfindung ist es jedoch auch möglich, einen stereoskopischen Sensor zu verwenden, der das Werkstück in zwei unterschiedlichen Blickrichtungen abtastet und eine dreidimensionale Bezugslinie liefert.

Ein Flachware-Werkstück wird zweckmäßig unter einem gegenüber der Hauptebene des Werkstücks nicht oder nur wenig geneigten Winkel von der Innen- und/oder Außenseite beleuchtet und vom Sensor in einer Blickrichtung abgetastet, die gegenüber der Hauptebene des Werkstücks um einen größeren Winkel als die Beleuchtungsrichtung geneigt ist. Bei dieser Schrägbeleuchtung wird durch Anordnung von Lichtquellen unter geeignetem Einstrahlungswinkel von innen und/oder außen ein Bild erzeugt, dessen Intensitätsverlauf den Oberflächenwinkeln entspricht. Dabei können Außen- und Innenbeleuchtung auch auf mehreren Aufnahmestationen unter verschiedenen Beleuchtungswinkeln angebracht sein.

Bei einer weiteren Ausgestaltung dieses Verfahrens wird das Werkstück aus unterschiedlichen Richtungen mit Licht unterschiedlicher Farbe beleuchtet, wobei ein als Farbaufnahmesystem ausgebildeter optischer Sensor Verwendung findet. Mit einem solchen Verfahren ist die Bestimmung von Oberflächenwinkeln von mehr als 90^{o} mit einer einzigen Sensorstation möglich.

Die Abtastung des Umfangsbereiches des Werkstücks kann statt mit einem parallelen Aufnahmeverfahren (foto-optische Abbildung mit Linsen) auch mittels eines Laser-Scannerstrahles erfolgen. Dabei wird die Winkellage von vorzugsweise in radialer Richtung des Werkstücks aufeinanderfolgenden Punkten sequentiell durch Abtastung bestimmt. Ein derartiges Verfahren mit Laser-Scanner bedingt zwar im Vergleich zu einer foto-optischen Aufnahme einen größeren Aufwand, ergibt andererseits jedoch eine größere Schärfentiefe und höhere Auflösung und ermöglicht eine schnellere Abtastung.

Eine weitere, im Rahmen der Erfindung verwendbare Methode zur Ermittlung der Bezugslinie ist das Triangulationsverfahren. Hierbei wird das vom Strahlengang gebildete Dreieck anhand des vom Sensor gemessenen Winkels für einen Satz von Punkten berechnet, wobei aus der so ermittelten, vorzugsweise radial zum Werkstück verlaufenden Höhenprofillinie nach vorbestimmten, parametrisierbaren Regeln ein Punkt der Bezugslinie gewonnen wird (z. B. höchster Punkt oder größte positive Krümmung). Durch Drehen des Werkstücks entsteht dabei ein Abbild der Gesamtwerkstückform und wird die ganze Bezugslinie gewonnen.

Ein weiteres im Rahmen der Erfindung anwendbares Verfahren ist das Lichtschnittverfahren. Zur Ermittlung der Bezugslinie wird hierbei wenigstens ein Lichtband auf das Werkstück projiziert und dieses Lichtband in einer von der Projektionsrichtung unterschiedlichen Blickrichtung durch den optischen Sensor aufgenommen, wobei aus der so ermittelten, vorzugsweise radial zum Werkstück verlaufenden Höhenprofillinie nach vorbestimmten, parametrisierbaren Regeln ein Punkt der Bezugslinie gewonnen wird. Bei diesem Verfahren können auch mehrere Lichtbänder nebeneinander projiziert und in einem einzigen Schritt aufgenommen werden.

Erfindungsgemäß ist es weiterhin möglich, nach Erzeugung der Sollkontur des Werkstücks diese Sollkontur durch erneutes schrittweises Abtasten des gesamten Umfangsbereiches des Werkstücks mittels des optischen Sensors berührungslos zu vermessen und ausgehend von der so gewonnenen neuen Bezugslinie ein Bearbeitungswerkzeug für eine weitere Bearbeitung, insbesondere für das Anbringen einer Abschrägung oder einer Abrundung, zu steuern.

Ausgehend von der durch den optischen Sensor ermittelten Bezugslinie kann ferner bei dem erfindungsgemäßen Verfahren durch das Bearbeitungswerkzeug eine frei definierbare Randform des Werkstücks erzeugt werden. Wenn am Werkstückrand eine berührungslos meßbare Bezugslinie vorhanden ist, können beispielsweise frei definierbare Randformen gefräst werden. So können etwa aus einer Teller-Grundform 12eckige oder ovale Teller hergestellt werden.

Bei dem erfindungsgemäßen Verfahren wird zweckmäßig das Werkstück während der Abtastung und der Bearbeitung relativ zum Sensor und zum Bearbeitungswerkzeug gedreht. Sensor und Bearbeitungswerkzeug sind hierbei raumfest, zweckmäßig in unterschiedlichen Umfangspositionen, angeordnet. Die Ermittlung der Bezugslinie und die Steuerung des Bearbeitungswerkzeuges können dabei zeitlich unmittelbar nacheinander während derselben Umdrehung erfolgen.

Einige Ausführungsbeispiele der Erfindung sind in der Zeichnung veranschaulicht. Es zeigen
- Fig.1: ein Schema einer Anlage zur Durchführung des erfindungsgemäßen Verfahrens,
- Fig.2 bis 4: Prinzipdarstellungen zur Erläuterung des Verfahrens gemäß Fig.1,
- Fig.5 bis 9: Prinzipdarstellungen von Varianten des erfindungsgemäßen Verfahrens.

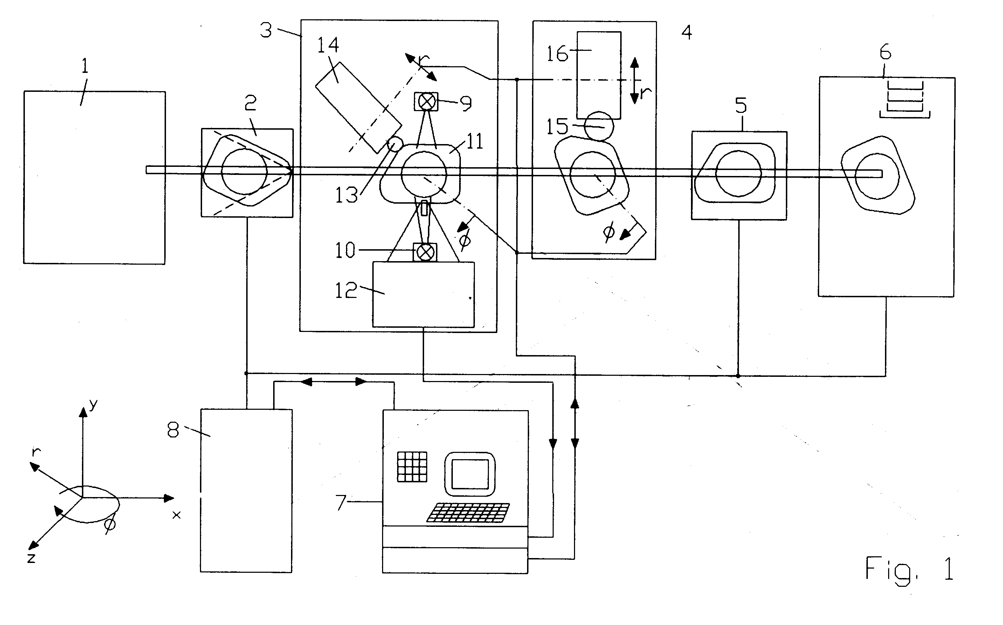

Die in Fig.1 ganz schematisch veranschaulichte Anlage zur Durchführung des erfindungsgemäßen Verfahrens enthält eine Presse 1, eine Zentrierstation 2, eine Schleifstation 3, eine Schwammstation 4, eine Station 5 zur Fußglättung, einen Stapeltisch 6, eine Steuerzentrale 7 sowie eine Steuereinrichtung 8 für den Transport.

Die Schleifstation 3 enthält zwei Lichtquellen 9, 10 zur Beleuchtung des Werkstücks 11, einen optischen Sensor 12 zur Ermittlung der Bezugslinie sowie ein nicht elastisches Bearbeitungswerkzeug 13 mit einer Steuereinrichtung 14 zur Nachführung des Werkzeugs 13 in radialer Richtung.

In der Schwammstation 4 ist gleichfalls ein Werkzeug 15 sowie eine Steuereinrichtung 16 zur radialen Nachführung vorgesehen.

Der optische Sensor 12 liefert die von ihm gewonnenen Meßsignale (aus denen die Bezugslinie ermittelt wird) an die Steuerzentrale 7, die ihrerseits einerseits über die Steuereinrichtung 8 die Zentrierstation 2 steuert und andererseits über die Steuereinrichtungen 14 und 16 die Werkzeuge 13 und 15 steuert. Dadurch wird in der Schleifstation 3 - ausgehend von der durch den optischen Sensor 12 ermittelten Bezugslinie - eine Sollkontur am Werkstück 11 erzeugt (beispielsweise der in der Presse 1 erzeugte Grat des Werkstücks entfernt), während in der Schwammstation 4 noch eine weitere Bearbeitung an dieser Sollkontur erfolgt, beispielsweise eine Abschrägung oder eine Abrundung, angebracht wird.

Wie aus dem zu Fig.1 gehörenden Koordinatensystem hervorgeht, wird die räumliche Lage des Werkzeugs 13 bzw. 15 (Vektor r im dreidimensionalen Koordinatensystem x, y, z) in Abhängigkeit vom Umfangswinkel φ gesteuert.

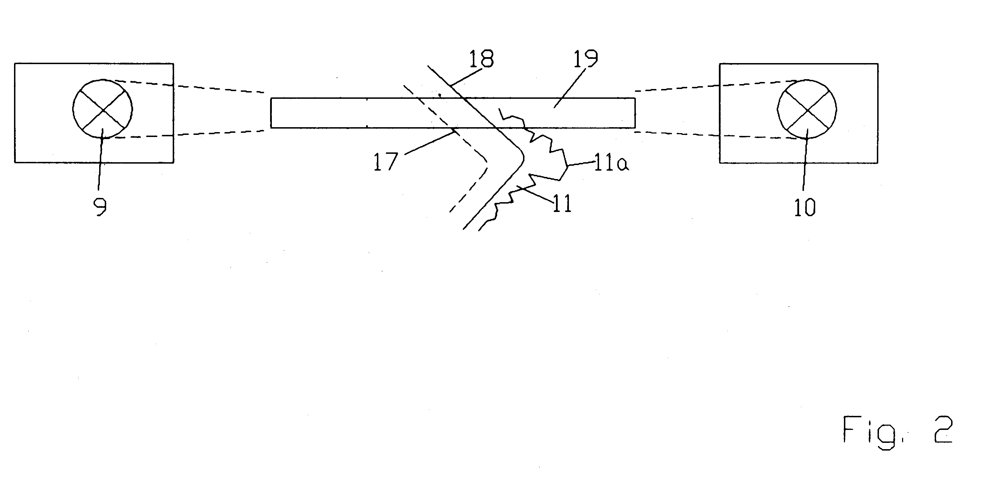

Die Ermittlung der Bezugslinie durch den optischen Sensor 12 beim Ausführungsbeispiel gemäß Fig.1 sei anhand der Fig.2 bis 4 noch etwas näher erläutert.

Wie Fig.2 zeigt, wird der mit einem Grat versehene Rand 11a des Werkstücks 11 durch die Lichtquellen 9 und 10 (die auf der Innenseite und Außenseite des Werkstücks angeordnet sind) beleuchtet. Es ergibt sich damit ein Hell-Dunkel- bzw. Dunkel-Hell-Übergang an der gestrichelten Linie, welche die zu ermittelnde Bezugslinie 17 darstellt. Die zu erzeugende Sollkontur des Werkstücks ist mit 18 bezeichnet; sie liegt bei dem dargestellten Ausführungsbeispiel etwas außerhalb der Bezugslinie 17.

Der optische Sensor 12 betrachtet den beleuchteten Umfangsbereich des Werkstücks 11 durch ein Sichtfenster 19.

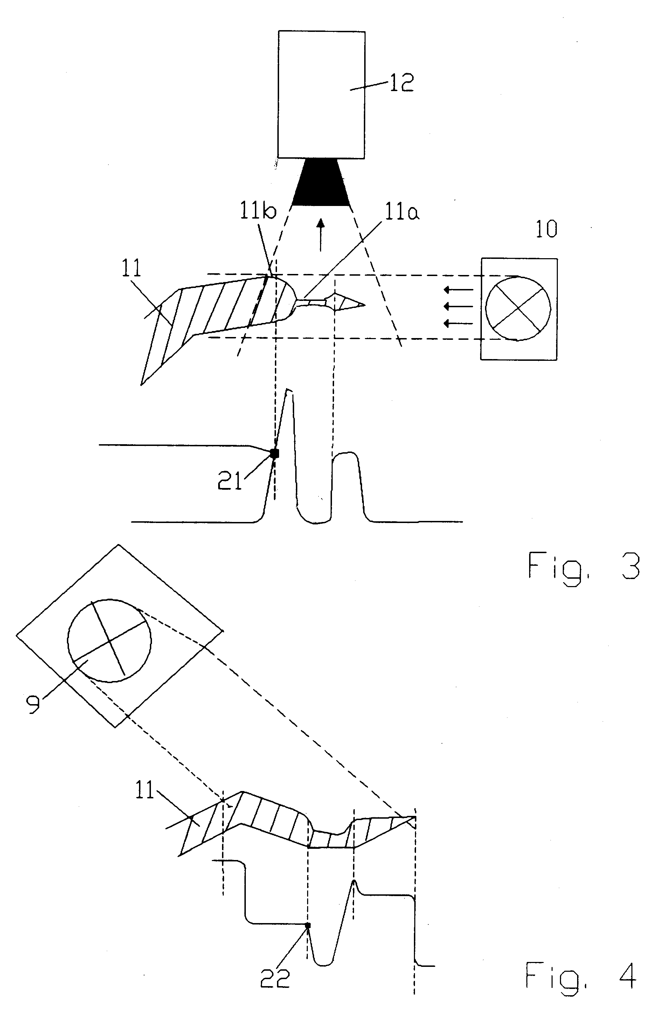

Während Fig.2 eine - ganz schematisch gehaltene - Aufsicht auf das beispielsweise horizontal angeordnete Werkstück zeigt, veranschaulicht Fig.3 einen gleichfalls schematisch gehaltenen Vertikalschnitt durch die Vorrichtung. Man erkennt, daß der mit einem Grat behaftete Rand 11a des Werkstücks 11 durch die Lichtquelle 10 unter einem Winkel beleuchtet wird, der gegenüber der Hauptebene des Werkstücks 11 (eines horizontal angeordneten Tellers) nicht oder nur wenig geneigt ist. Der optische Sensor 12 tastet dagegen den Umfangsbereich des Werkstücks 11 in einer Blickrichtung ab, die etwa um einen Winkel von 90^{o} gegenüber der Hauptebene des Werkstücks geneigt ist.

Im unteren Teil der Fig.3 ist der Grauwertverlauf veranschaulicht, wie er vom optischen Sensor 12 ermittelt wird. Man erkennt, daß sich im obersten Bereich 11b des Tellerrandes eine scharfe Änderung der Helligkeit ergibt. Durch Festlegung einer bestimmten Licht-Intensitätsschwelle kann beispielsweise der Punkt 21 als Erkennungspunkt zur Gewinnung der Bezugslinie herangezogen werden. Durch wiederholtes Abtasten bei gleichzeitiger Drehung des Werkstücks 11 wird die gesamte Bezugslinie 17 punktweise zusammengesetzt.

Fig.4 zeigt eine Variante, bei der die Lichtquelle 9 schräg zur Hauptebene des Werkstücks 11 angeordnet ist. Der sich bei einer solchen Beleuchtung ergebende, vom optischen Sensor 12 gesehene Grauwertverlauf ist im unteren Teil der Fig.4 veranschaulicht. Wertet man beispielsweise Intensitätsdifferenzen benachbarter Punkte aus, so läßt sich etwa am Punkt 22 ein Hell-Dunkel-Übergang feststellen, der für die Gewinnung der Bezugslinie herangezogen werden kann.

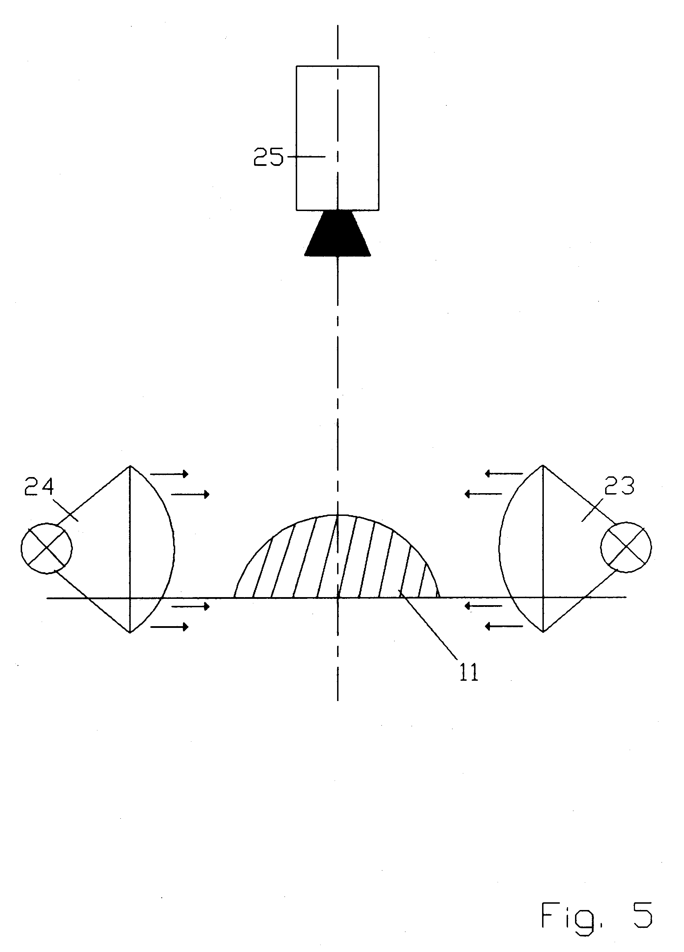

Fig.5 zeigt in ganz schematischer Darstellung die Verwendung von zwei Lichtquellen 23, 24 unterschiedlicher Farbe, durch die das Werkstück 11, das einen diffusen Reflektor bildet, beispielsweise mit grünem Licht (durch die Lichtquelle 23) und mit rotem Licht (durch die Lichtquelle 24) beleuchtet wird. Der optische Sensor 25 wird bei diesem Ausführungsbeispiel durch ein Farbaufnahmesystem gebildet. Mittels einer solchen Einrichtung läßt sich in einer einzigen Aufnahmestation ein Oberflächen-Winkelbereich von mehr als 90^{o} erfassen.

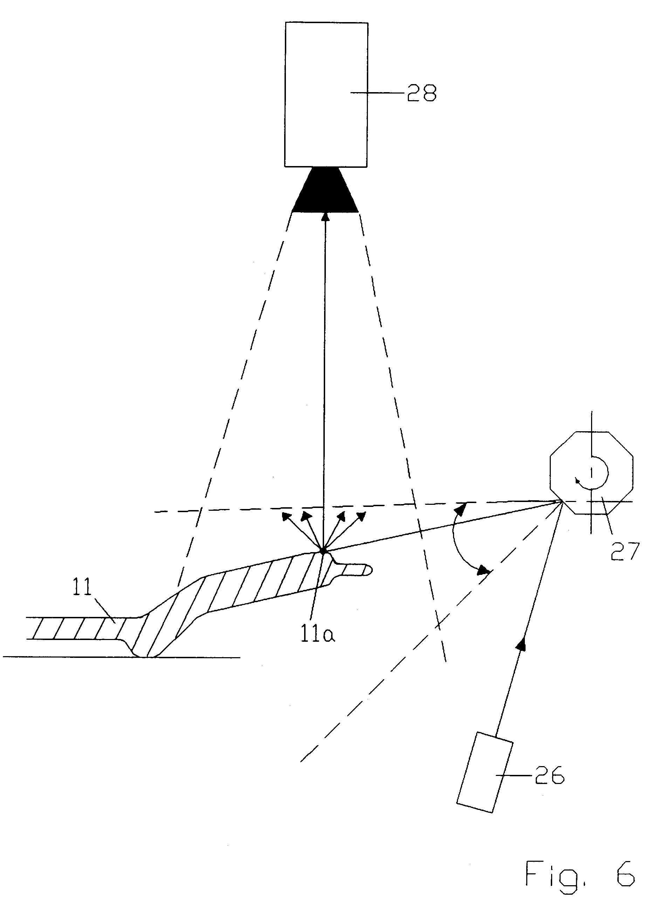

Das Ausführungsbeispiel gemäß Fig.6 verwendet zur Gewinnung der Bezugslinie eine Laser-Scanner-Anordnung. Sie enthält eine Laserstrahlquelle 26, ein drehbares Spiegel-Polygonrad 27 sowie einen als Laserstrahl-Empfänger ausgebildeten optischen Sensor 28.

Durch das rotierende Spiegel-Polygonrad 27 wird auf das Werkstück 11 ein den Werkstückrand 11a abtastender Laserstrahl geworfen, der nach Reflexion am Werkstückrand durch den Sensor 28 aufgenommen wird.

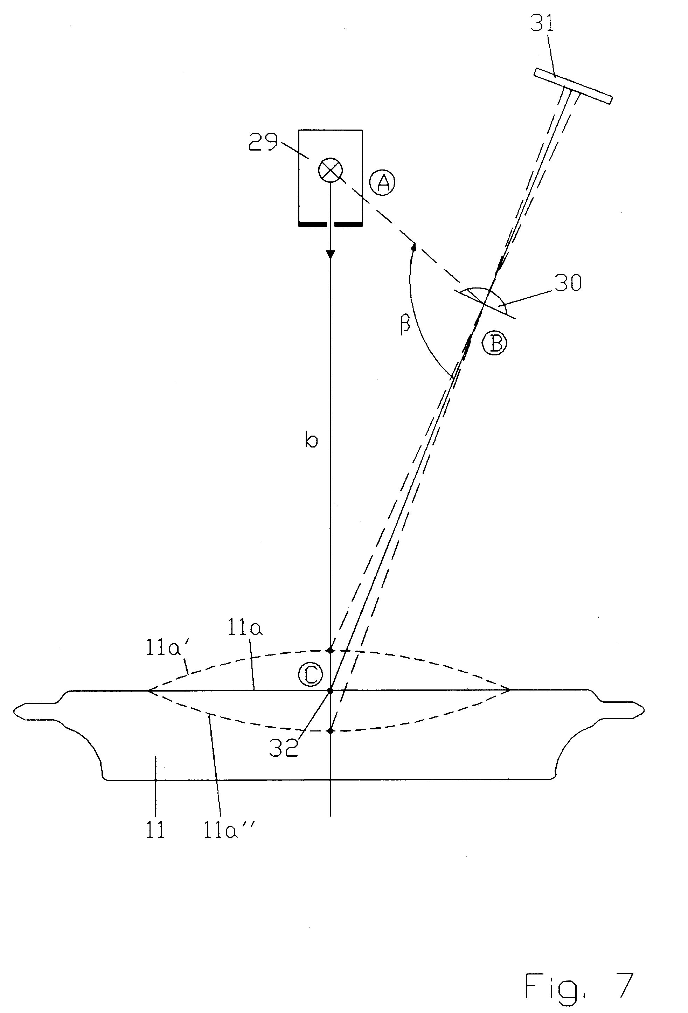

Fig.7 veranschaulicht in ganz schematischer Form eine Variante, bei der das Triangulationsverfahren zur Gewinnung der Bezugslinie verwendet wird. Das Werkstück 11 wird von einer Lichtquelle 29 beleuchtet. Der am Werkstückrand 11a bzw. 11a', 11a'' reflektierte Lichtstrahl gelangt über ein Linsensystem 30 zu einem positionsempfindlichen optischen Sensor 31.

Bezeichnet man das von Lichtquelle 29, Linsensystem 30 und Strahlauftreffpunkt 32 am Werkstückrand gebildete Dreieck mit A, B und C, den Dreieckswinkel bei B mit β sowie die Höhe der Lichtquelle 29 über dem Strahlauftreffpunkt 32 mit b, so läßt sich die Höhe b durch Messung des Winkels β bestimmen. Für die unterschiedlich hohen Werkstückränder 11a, 11a', 11a'' ergeben sich somit unterschiedliche Winkel β und demgemäß unterschiedliche Höhen b.

Durch Berechnung eines Satzes von Strahlauftreffpunkten 32 in radialer Richtung wird eine radiale Höhenprofillinie ermittelt. Aus dieser Profillinie wird nach parametrisierbaren Regeln ein Punkt der Bezugslinie gewonnen (z. B. höchster Punkt oder größte positive Krümmung). Durch Drehung des Werkstücks entsteht ein Abbild der gesamten Werkstückform.

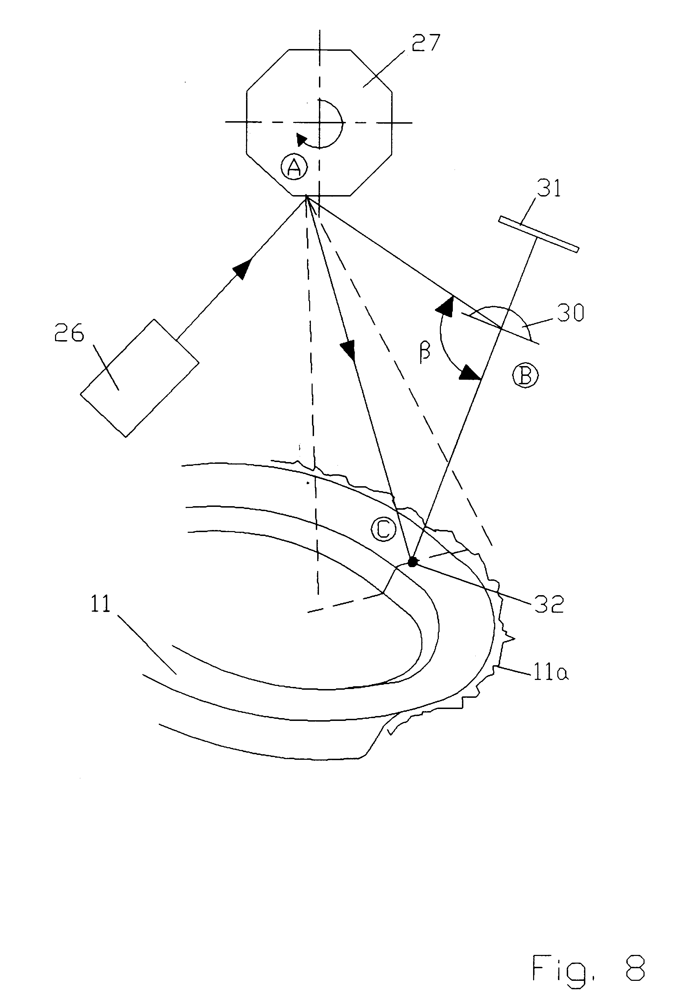

Fig.8 veranschaulicht die Anwendung des Triangulationsverfahrens bei Verwendung eines Laser-Scanners. Die für die einzelnen Bauteile verwendeten Bezeichnungen entsprechen den Fig.6 und 7. Das Dreieck ist wiederum mit ABC bezeichnet.

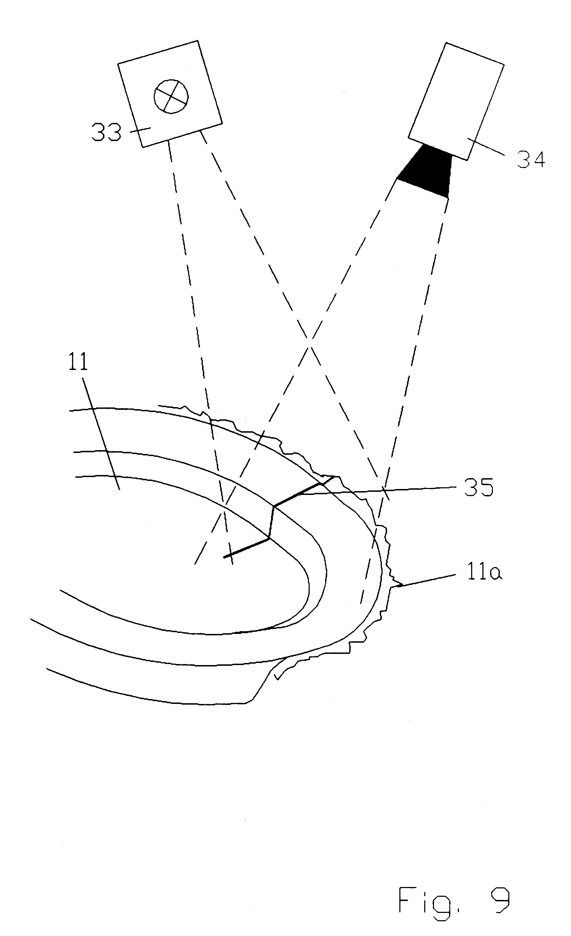

Fig.9 zeigt schließlich eine Variante des erfindungsgemäßen Verfahrens, bei dem zur Ermittlung der Bezugslinie wenigstens ein Lichtband durch einen Lichtbandprojektor 33 auf das Werkstück 11 projiziert und dieses Lichtband in einer von der Projektionsrichtung unterschiedlichen Blickrichtung durch einen optischen Sensor 34 aufgenommen wird. Aus der so ermittelten, vorzugsweise radial zum Werkstück 11 verlaufenden Höhenprofillinie 35 wird nach vorbestimmten Regeln ein Punkt der Bezugslinie gewonnen. Durch Drehung des Werkstücks wird die gesamte Bezugslinie erzeugt.

## Patentansprüche

1. Verfahren zur Erzeugung einer gewünschten Kontur am äußeren Umfang eines Werkstücks (11), insbesondere aus Keramik oder Porzellan, wobei
a) zunächst der gesamte Umfangsbereich des unbearbeiteten Werkstücks (11) durch eine Lichtquelle beleuchtet und durch einen das an der Werkstückoberfläche reflektierte Licht aufnehmenden optischen Sensor (12) schrittweise abgetastet wird und hierdurch eine Bezugslinie ermittelt, und
b) anschließend die gewünschte Kontur (18) des Werkstücks durch ein anhand der Bezugslinie gesteuertes, rotierendes, nicht elastisches Bearbeitungswerkzeug (13) erzeugt wird,
dadurch gekennzeichnet, daß
c) ein zur Erfassung von Formmerkmalen des Werkstücks geeigneter Sensor (12) Verwendung findet und
d) durch eine das Ausgangssignal des Sensors auswertende Steuerzentrale eine Bezugslinie (17) ermittelt wird, die auf der Oberfläche nahe des äußeren Randes des Werkstücks (11), jedoch innerhalb der gewünschten Kontur (18) liegt, wobei
e) die Bezugslinie durch Auswertung des Ausgangssignales des Sensors ermittelt und durch diejenigen Punkte auf der Oberfläche des Werkstückes definiert wird, die eine vorgegebene Bedingung an das Ausgangssignal des Sensors erfüllen.

2. Verfahren nach Anspruch 1, dadurch gekennzeichnet, daß das Werkstück (11) in einem von der Blickrichtung des Sensors (12) abweichenden Winkel beleuchtet und die Bezugslinie durch Auswertung der Helligkeit des vom Werkstück reflektierten und vom Sensor aufgenommenen Lichts ermittelt wird.

3. Verfahren nach Anspruch 2, dadurch gekennzeichnet, daß zur Ermittlung der Bezugslinie diejenigen Punkte im Umfangsbereich des Werkstücks (11) bestimmt werden, die gleiche Helligkeit und damit gleiche Oberflächenneigung zum einfallenden Licht aufweisen.

4. Verfahren nach Anspruch 2, dadurch gekennzeichnet, daß zur Ermittlung der Bezugslinie Helligkeitsdifferenzen benachbarter Punkte im Umfangsbereich des Werkstücks (11) bestimmt werden.

5. Verfahren nach Anspruch 1, gekennzeichnet durch Verwendung eines das Werkstück in einer einzigen Blickrichtung abtastenden einäugigen Sensors zur Gewinnung einer zweidimensionalen Bezugslinie.

6. Verfahren nach Anspruch 1, gekennzeichnet durch Verwendung eines das Werkstück in zwei unterschiedlichen Blickrichtungen abtastenden stereoskopischen Sensors zur Gewinnung einer dreidimensionalen Bezugslinie.

7. Verfahren nach Anspruch 2, dadurch gekennzeichnet, daß ein Werkstück (11) unter einem gegenüber der Hauptebene des Werkstücks nicht oder nur wenig geneigten Winkel von der Innen- und/oder Außenseite beleuchtet und vom Sensor (12) in einer Blickrichtung abgetastet wird, die gegenüber der Hauptebene des Werkstücks um einen größeren Winkel als die Beleuchtungsrichtung geneigt ist.

8. Verfahren nach Anspruch 7, dadurch gekennzeichnet, daß das Werkstück (11) aus unterschiedlichen Richtungen mit Lichtquellen (23, 24) unterschiedlicher Farbe beleuchtet wird und ein als Farbaufnahmesystem ausgebildeter optischer Sensor (25) Verwendung findet.

9. Verfahren nach Anspruch 1, dadurch gekennzeichnet, daß die Abtastung des Umfangsbereiches des Werkstücks mittels eines Laser-Scanner-Strahles erfolgt.

10. Verfahren nach Anspruch 1, dadurch gekennzeichnet, daß zur Ermittlung der Bezugslinie das vom Strahlengang gebildete Dreieck (ABC) anhand des vom Sensor (31) gemessenen Winkels (β) für einen Satz von Punkten berechnet und aus der so ermittelten, vorzugsweise radial zum Werkstück (11) verlaufenden Höhenprofillinie nach vorbestimmten Regeln ein Punkt der Bezugslinie gewonnen wird.

11. Verfahren nach Anspruch 1, dadurch gekennzeichnet, daß zur Ermittlung der Bezugslinie wenigstens ein Lichtband auf das Werkstück (11) projiziert und dieses Lichtband in einer von der Projektionsrichtung unterschiedlichen Blickrichtung durch den optischen Sensor (34) aufgenommen wird, wobei aus der so ermittelten, vorzugsweise radial zum Werkstück verlaufenden Höhenprofillinie (35) nach vorbestimmten Regeln ein Punkt der Bezugslinie gewonnen wird.

12. Verfahren nach Anspruch 1, dadurch gekennzeichnet, daß nach Erzeugung der gewünschten Kontur des Werkstücks diese Kontur durch erneutes schrittweises Abtasten des gesamten Umfangsbereiches des Werkstücks mittels des optischen Sensors berührungslos vermessen und ausgehend von der so gewonnenen neuen Bezugslinie ein Bearbeitungswerkzeug für eine weitere Bearbeitung, insbesondere für das Anbringen einer Abschrägung oder einer Abrundung, gesteuert wird.

13. Verfahren nach Anspruch 1, dadurch gekennzeichnet, daß ausgehend von der durch den optischen Sensor ermittelten Bezugslinie durch das Bearbeitungswerkzeug eine frei definierbare Randform des Werkstücks erzeugt wird.

14. Verfahren nach Anspruch 1, dadurch gekennzeichnet, daß das Werkstuck (11) während der Abtastung und Bearbeitung relativ zum Sensor (12) und zum Bearbeitungswerkzeug (13) gedreht wird.

15. Vorrichtung zur Erzeugung einer gewünschten Kontur am äußeren Umfang eines Werkstücks (11), insbesondere aus Keramik oder Porzellan, enthaltend
a) eine Lichtquelle (9, 10),
b) einen das an der Werkstückoberfläche reflektierte Licht aufnehmenden optischen Sensor (12) zur schrittweisen Abtastung des gesamten Umfangsbereiches des unbearbeiteten Werkstücks (11) zwecks Ermittlung einer Bezugslinie (17),
c) sowie ein anhand der Bezugslinie steuerbares, mit einem Drehantrieb verbundenes, nicht elastisches Bearbeitungswerkzeug (13),
dadurch gekennzeichnet, daß
d) der Sensor (12) zur Erfassung von Formmerkmalen des Werkstücks ausgebildet ist, und
e) eine zur Auswertung des Ausgangssignales des Sensors geeignete Steuerzentrale (7) vorgesehen ist, durch die diejenigen Punkte bestimmbar sind, die eine vorgegebene Bedingung an das Ausgangssignal des Sensors erfüllen, wobei mit diesen Punkten eine Bezugslinie definiert ist, die auf der Oberfläche nahe des äußeren Randes des Werkstücks (11), jedoch innerhalb der gewünschten Kontur (18) liegt.

## Claims

1. Method of producing a desired contour on the outer periphery of a workpiece (11) , particularly made from ceramic or porcelain, in which
a) first of all the entire peripheral region of the unmachined workpiece (11) is illuminated by a light source and is scanned in steps by an optical sensor (12) which picks up the light reflected on the surface of the workpiece and a reference line is determined thereby and
b) then the desired contour (18) of the workpiece is produced by a rotating non-elastic machining tool (13) which is controlled with the aid of the reference line,
characterised in that
c) a sensor (12) is used which is adapted for determining features of the shape of the workpiece and
d) by means of a control centre which evaluates the output signal from the sensor a reference line (17) is determined which lies on the surface near the outer edge of the workpiece (11) but within the desired contour (18),
e) the reference line being determined by evaluation of the output signal from the sensor and defined by those points on the surface of the workpiece which satisfy a predetermined condition of the output signal of the sensor.

2. Method as claimed in Claim 1, characterised in that the workpiece (11) is illuminated at an angle deviating from the direction of view of the sensor (12) and the reference line is determined by evaluation of the brightness of the light reflected by the workpiece and picked up by the sensor.

3. Method as claimed in Claim 2, characterised in that in order to determine the reference line those points in the peripheral region of the workpiece (11) can be determined which have the same brightness and the same surface inclination to the incident light.

4. Method as claimed in Claim 2, characterised in that in order to determine the reference line differences in brightness between adjacent points in the peripheral region of the workpiece (11) are determined.

5. Method as claimed in Claim 1, characterised by the use of a monocular sensor which scans the workpiece in one single direction of view in order to obtain a two-dimensional reference line.

6. Method as claimed in Claim 1, characterised by the use of stereoscopic sensor which scans the workpiece in two different directions of view in order to obtain a three-dimensional reference line.

7. Method as claimed in Claim 2, characterised in that a workpiece (11) is illuminated from the inside and/or the outside at an angle which is inclined only slightly or not at all with respect to the principal plane of the workpiece and is scanned by the sensor (12) in a direction of view which is inclined with respect to the principal plane of the workpiece by a greater angle than the direction of illumination.

8. Method as claimed in Claim 7, characterised in that the workpiece (11) is illuminated from different directions with light sources (23, 24) of different colours, using an optical sensor (25) as the colour recording system.

9. Method as claimed in Claim 1, characterised in that the scanning of the peripheral region of the workpiece is carried out by a laser scanner beam.

10. Method as claimed in Claim 1, characterised in that in order to determine the reference line the triangle (ABC) formed by the beam path is calculated for a set of points with the aid of the angle (β) measured by the sensor (31), and from the height profile line thus determined, which preferably runs radially with respect to the workpiece (11), a point of the reference line is obtained according to predetermined rules.

11. Method as claimed in Claim 1, characterised in that in order to determine the reference line at least one strip of light is projected onto the workpiece (11) and this strip of light is picked up by the optical sensor (34) in a direction of view which differs from the direction of projection, and from the height profile line (35) thus determined, which preferably runs radially with respect to the workpiece, a point of the reference line is obtained according to predetermined rules.

12. Method as claimed in Claim 1, characterised in that after producing the theoretical contour of the workpiece, to measure this theoretical contour by fresh scanning in steps of the entire peripheral region of the workpiece by means of the optical sensor without contact and, starting from the new reference line thus obtained, to control a machining tool for further machining, particularly for the application of a chamfer or a curve.

13. Method as claimed in Claim 1, characterised in that starting from the reference line determined by the optical sensor, a freely definable edge shape of the workpiece is produced by the machining tool.

14. Method as claimed in Claim 1, characterised in that the workpiece (11) is advantageously rotated relative to the sensor (12) and to the machining tool (13) during the scanning and the machining.

15. Device for producing a desired contour on the outer periphery of a workpiece (11), particularly made from ceramic or porcelain, comprising
a) a light source (9, 10),
b) an optical sensor (12) which picks up the light reflected on the surface of the workpiece for scanning in steps of the entire peripheral region of the unmachined workpiece (11) for the purpose of determining a reference line (17),
c) as well as a non-elastic machining tool (13) which can be controlled with the aid of the reference line and is connected to a rotary drive.
characterised in that
d) the sensor (12) is constructed for determining features of the shape of the workpiece, and
e) a control centre (7) is provided which is adapted for evaluation of the output signal from the sensor and by means of which those points can be determined which satisfy a predetermined condition of the output signal of the sensor, a reference line being defined with these points which lies on the surface near the outer edge of the workpiece (11) but within the desired contour (18).

## Revendications

1. Procédé de réalisation d'un contour souhaité à la circonférence extérieure d'une pièce (11), en particulier de céramique ou de porcelaine, suivant lequel
a) tout d'abord la totalité de la circonférence de la pièce non usinée (11) est éclairée par une source lumineuse et explorée par à pas par un détecteur optique (12) qui réceptionne la lumière réfléchie à la surface de la pièce et en détermine une ligne de référence et
b) ensuite le contour souhaité (18) de la pièce est réalisé par un outil rotatif, non élastique d'usinage (13) qui est commandé en fonction de la ligne de référence,
caractérisé en ce que
c) un détecteur (12) qui convient à déceler des particularités de la forme de la pièce est utilisé et
d) une centrale de commande qui analyse le signal de sortie du détecteur détermine une ligne de référence (17) qui est située à la surface, à proximité du bord extérieur de la pièce (11), mais à l'intérieur du contour souhaité (18),
e) la ligne de référence étant déterminée par analyse du signal de sortie du détecteur et définie par les points de la surface de la pièce qui satisfont à une condition prescrite au signal de sortie du détecteur.

2. Procédé selon la revendication 1, caractérisé en ce que la pièce (11) est éclairée sous un angle qui diffère de la direction d'observation du détecteur (12) et la ligne de référence est déterminée par analyse de la luminosité de la lumière réfléchie par la pièce et reçue par le détecteur.

3. Procédé selon la revendication 2, caractérisé en ce que les points de la circonférence de la pièce (11) qui ont la même luminosité et donc la même inclinaison de surface sur la lumière incidente sont utilisés pour la détermination de la ligne de référence.

4. Procédé selon la revendication 2, caractérisé en ce que les différences de luminosité de points voisins de la circonférence de la pièce (11) sont déterminées pour la détermination de la ligne de référence.

5. Procédé selon la revendication 1, caractérisé par l'utilisation d'un détecteur mono-oculaire, qui explore la pièce dans une unique direction d'observation pour l'obtention d'une ligne bidimensionnelle de référence.

6. Procédé selon la revendication 1, caractérisé par l'utilisation d'un détecteur stéréoscopique qui observe la pièce dans deux directions différentes d'observation pour l'obtention d'une ligne tridimensionnelle de référence.

7. Procédé selon la revendication 2, caractérisé en ce qu'une pièce (11) est éclairée par le côté intérieur et/ou extérieur sous un angle qui n'est pas ou qui n'est que peu incliné sur le plan principal de la pièce et elle est explorée par le détecteur (12) dans une direction d'observation qui est inclinée sur le plan principal de la pièce suivant un plus grand angle que celui de la direction d'éclairage.

8. Procédé selon la revendication 7, caractérisé en ce que la pièce (11) est éclairée dans des directions différentes par des sources lumineuses (23, 24) de couleurs différentes et un détecteur optique (25) réalisé sous la forme d'un système de prise de vues en couleurs est utilisé.

9. Procédé selon la revendication 1, caractérisé en ce que l'exploration de la circonférence de la pièce est effectuée au moyen d'un rayon laser de scanner.

10. Procédé selon la revendication 1, caractérisé en ce que le triangle (A, B, C) formé par la marche des faisceaux est calculé à l'aide de l'angle (β) mesuré par le détecteur (31) pour un groupe de points en vue de la détermination de la ligne de référence et un point de la ligne de référence est obtenu d'après des règles prédéterminées à partir de la ligne de profil de hauteur ainsi déterminée et orientée de préférence radialement sur la pièce (11).

11. Procédé selon la revendication 1, caractérisé en ce qu'au moins une bande lumineuse est projetée sur la pièce (11) pour la détermination de la ligne de référence et cette bande lumineuse est reçue par le détecteur optique (34) dans une direction d'observation qui diffère de la direction de projection, un point de la ligne de référence étant obtenu d'après des règles prédéterminées à partir de la ligne (35) de profil de hauteur qui est ainsi déterminée et orientée de préférence radialement sur la pièce.

12. Procédé selon la revendication 1, caractérisé en ce qu'après production du contour souhaité de la pièce, ce contour est mesuré sans contact au moyen du détecteur optique par nouvelle exploration pas à pas de l'ensemble de la circonférence de la pièce et un outil d'usinage est commandé à partir de la nouvelle ligne de référence ainsi obtenue pour un autre usinage, en particulier pour la réalisation d'un chanfrein ou d'un arrondi.

13. Procédé selon la revendication 1, caractérisé en ce que l'outil d'usinage produit une forme librement définissable du bord de la pièce à partir de la ligne de référence déterminée par le détecteur optique.

14. Procédé selon la revendication 1, caractérisé en ce que la pièce (11) est entraînée en rotation pendant l'exploration et l'usinage par rapport au détecteur (12) et à l'outil d'usinage.

15. Dispositif de production d'un contour souhaité à la circonférence extérieure d'une pièce (11), en particulier de céramique ou de porcelaine, comprenant
a) une source lumineuse (9, 10),
b) un détecteur optique (12) qui réceptionne la lumière réfléchie à la surface de la pièce et qui est destiné à l'exploration pas à pas de la totalité de la clrconférence de la pièce non usinée (11) en vue de la détermination d'une ligne de référence (17),
c) ainsi qu'un outil non élastique d'usinage (13) qui est commandé en fonction de la ligne de référence et qui est relié à une commande de rotation,
caractérisé en ce que
d) le détecteur (12) est conçu pour la détection de particularités de la forme de la pièce et
e) une centrale de-commande (7) qui convient à l'analyse du signal de sortie du détecteur et qui est prévue détermine les points qui satisfont à une condition prescrite au signal de sortie du détecteur, une ligne de référence qui est définie par ces points étant située à la surface, à proximité du bord extérieur de la pièce (11), mais à l'intérieur du contour souhaité (18).
